# DEMANDE DE BREVET EUROPEEN

(11) **EP 0 586 304 A1**
(43) Date de publication de la demande: **09.03.1994**
(21) Numéro de dépôt: 93402137.9
(22) Date de dépôt: 02.09.1993
(51) Int. Cl.: F16H 45/02, F16F 15/12

(54) **Convertisseur de couple hydrocinétique pontable et procédé de montage de ce convertisseur.**

(30) Priorité: 04.09.1992 FR 9210555; 04.09.1992 FR 9210556
(71) Demandeur: Société Anonyme dite: REGIE NATIONALE DES USINES RENAULT, F-92109 Boulogne Billancourt (FR)
(72) Inventeur: Duez, Alain, F-92500 Rueil Malmaison (FR); Lemaitre, Michel, F-92000 Nanterre (FR); Parthuisot, Jean-Pierre, F-92500 Rueil Malmaison (FR)

(57) **Abrégé**

Convertisseur de couple hydrocinétique (1) entre un arbre d'entrée de mouvement (3) et un arbre de sortie ou arbre de turbine (5) comportant une cloche extérieure (2) solidaire de l'arbre d'entrée de mouvement (3), une turbine (4) solidaire de l'arbre de sortie (5) et un piston (7) solidaire en rotation de la turbine (4), dont le serrage contre un élément (11) fixé sur la cloche (2) permet d'interdire de façon temporaire tout glissement à l'intérieur du convertisseur (1), caractérisé en ce que le piston (7) est solidaire en rotation d'une rondelle de friction (12) maintenue en appui contre la cloche (2).

## Description

La présente invention est relative à un convertisseur de couple hydrocinétique pontable, notamment pour transmission automatique de véhicule automobile. Plus précisément elle se rapporte aux moyens de pontage de ce convertisseur, et au montage de ces moyens de pontage.

Sur la plupart des convertisseurs de couple hydrocinétiques actuellement utilisés, les moyens de pontage, comportent un piston susceptible de se déplacer axialement entre la cloche et la turbine du convertisseur pour être être serré, de façon temporaire, contre un élément fixé sur la turbine.

Sur la plupart des convertisseurs de couple hydrocinétiques connus, les moyens de pontage sont commandés de façon hydraulique. La publication FR 2 478 770 de la demanderesse décrit à ce sujet un système de pontage dont la commande est assurée par l'excitation d'une électrovanne établissant de façon temporaire à l'intérieur de l'enceinte du convertisseur une pression intermédiaire qui permet de serrer un piston solidaire de la turbine contre un élément fixé sur la cloche. Conformément à cette publication, le piston est fixé par sa base sur l'arbre de turbine sans autre point d'appui vis-à-vis de la turbine : il en résulte qu'en position de pontage, ce point de fixation est soumis à des efforts importants.

En vue d'obtenir une meilleure répartition des efforts au sein des éléments mécaniques responsables de la transmission du couple en position de pontage, la demande de brevet FR 92 04834 de la demanderesse non publiée à ce jour, propose de monter la turbine et le piston du convertisseur au moyen d'un rivet, de part et d'autre d'une armature fixée sur l'arbre de turbine, le déplacement axial de la base du piston entre ses deux positions extrêmes s'effectuant à l'intérieur de la tête du rivet. Cette disposition permet de contrôler d'une façon très simple la course du piston, en choisissant la hauteur de la tête du rivet. Toutefois, entre le piston la turbine et l'arbre de turbine, le couple transite en permanence par l'intermédiaire du rivet. Celui-ci est donc soumis à des efforts extrêmement importants. Il risque de se rompre par cisaillement, entraînant ainsi la mise hors service du convertisseur.

La présente invention a pour but d'obtenir une meilleure transmission du couple entre le piston et l'arbre de turbine, afin de supprimer tout risque de rupture du rivet.

Elle propose à cet effet un convertisseur de couple hydrocinétique entre un arbre d'entrée de mouvement et un arbre de sortie ou arbre de turbine comportant une cloche extérieure solidaire de l'arbre d'entrée de mouvement, une turbine solidaire de l'arbre de sortie et un piston solidaire en rotation de la turbine, dont le serrage contre un élément fixé sur la cloche permet d'interdire de façon temporaire tout glissement à l'intérieur du convertisseur. Ce convertisseur est caractérisé en ce que le piston est solidaire en rotation d'une rondelle de friction maintenue en appui contre la cloche.

Par ailleurs, la disposition proposée dans la demande de brevet FR 92 04834, bien qu'extrêmement avantageuse, en ce qui concerne la répartition et la transmission des efforts au sein du convertisseur, pose toutefois de sérieuses difficultés, de montage. En effet, le positionnement de la turbine à l'intérieur du convertisseur et la pose des rivets doivent s'effectuer en aveugle à l'interieur du convertisseur, sans moyen de contrôle visuel.

Pour supprimer toute incertitude relative au montage de la turbine sur le piston, l'invention propose également de modifier les moyens de fixation de ces deux éléments sur l'arbre de turbine. Elle vise notamment à supprimer le montage en aveugle de la turbine sur le piston et à pouvoir contrôler en temps réel, l'assemblage des différents moyens de pontage.

Ce problème est résolu en adoptant un arbre de turbine dont le moyeu présente deux parties supportant respectivement le piston et la turbine.

L'invention concerne également un procédé de montage du convertisseur résolvant ce problème. Ce procédé comporte les étapes suivantes :
- montage de l'amortisseur sur la cloche,
- montage du joint dans la gorge du moyeu de piston,
- montage de la rondelle sur le piston,
- montage du piston sur le moyeu de piston,
- montage de l'ensemble rondelle, piston, moyeu de piston dans la cloche,
- montage de l'élément de serrage, sur l'amortisseur,
- montage du plateau sur le moyeu de turbine.

L'invention sera mieux comprise à la lecture de la description suivante d'un mode de réalisation particulier de celle-ci, en liaison avec les dessins annexés, sur lesquels :
- la figure 1 est une coupe longitudinale d'un convertisseur pontable conforme à l'invention,
- la figure 2 est un agrandissement partiel de la figure 1, mettant en évidence la structure du moyeu et des moyens de pontage du convertisseur.

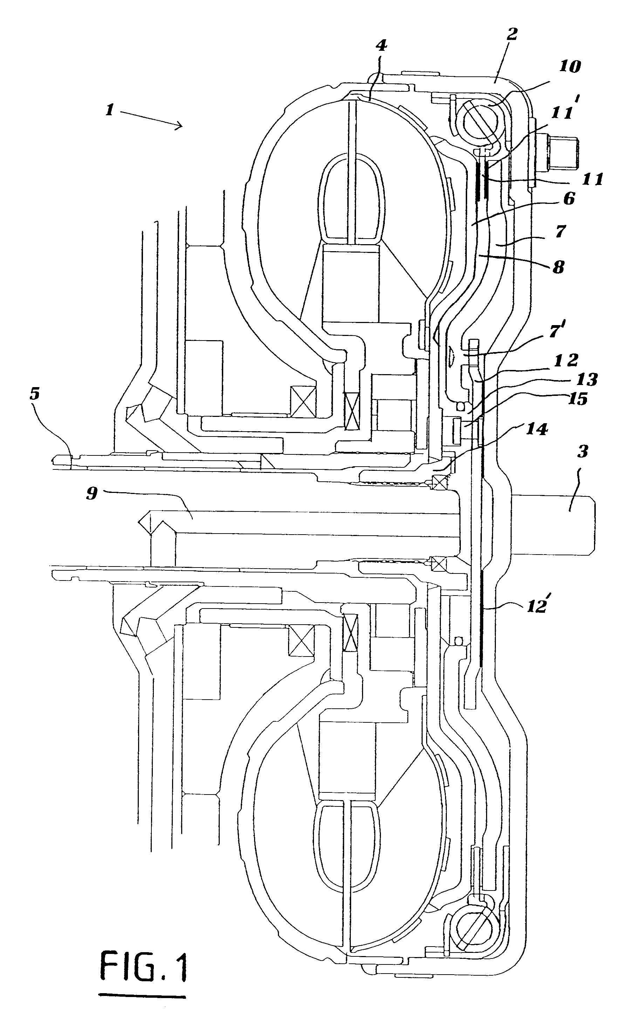

Sur la figure 1, on distingue l'arbre d'entrée de mouvement 3 dans le convertisseur et la cloche 2 de celui-ci. A l'intérieur de la cloche 2, apparaissent la turbine 4, son plateau de fixation 6, et le piston de de serrage 11 muni de garnitures 11', qui est fixé par l'intermédiaire d'un ressort d'amortissement 10 sur la cloche 2. A sa base, le piston 7 est monté sur un moyeu de piston 13, constituant la première partie d'un moyeu en deux parties 13, 14. La seconde partie 14, ou moyeu de turbine 14, du moyeu en deux parties 13, 14, supporte d'une part le plateau 6 sur lequel est fixé la turbine 4, et d'autre part le moyeu de piston 13. Sur ce dernier est fixée, par l'intermédiaire de rivets 15, une rondelle de friction 12, en appui contre l'intérieur de la cloche 2, par l'intermédiaire d'une garniture de friction 12' recouvrant sa face opposée au moyeu de piston 13. Conformément à l'invention, le piston 7 présente plusieurs extrusions cylindriques 7' embouties sur sa face opposée à la turbine 4, et engagées au travers de la rondelle de friction 12.

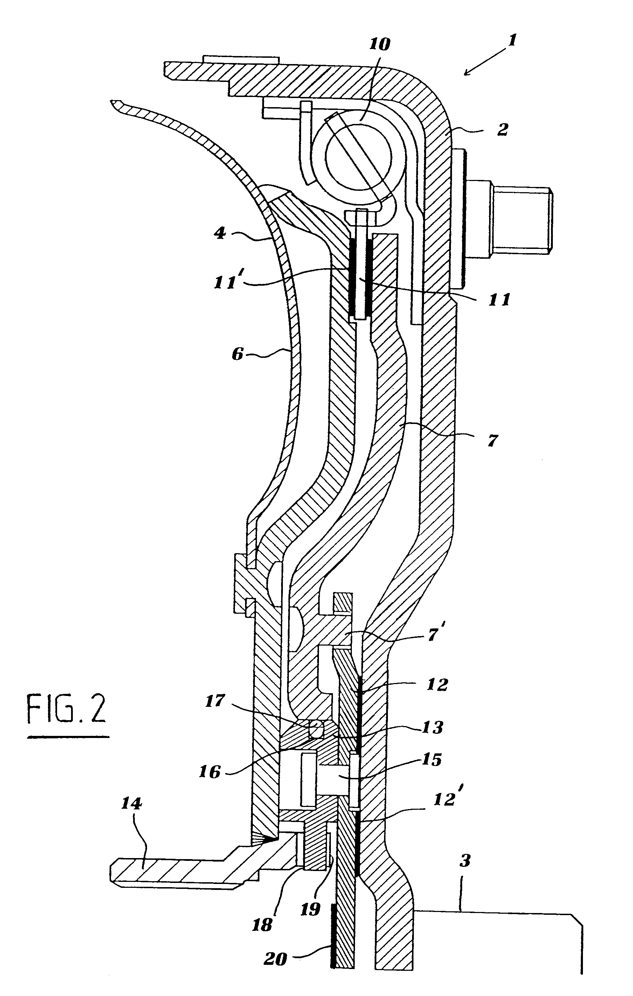

Sur l'agrandissement partiel de la figure 2, on retrouve les mêmes éléments que sur la figure 1. Comme sur celle-ci, le piston 7 est serré contre l'élément 11, ce qui signifie que le convertisseur est ponté. De façon connue, cette situation résulte simplement du fait qu'aucune pression d'alimentation n'est appliquée à l'intérieur de la chambre 8 délimitée par le plateau 6 et le piston 7, la pression interne du convertisseur maintenant le piston 7 et le plateau 6, serrés contre l'élément 11, de part et d'autre de celui-ci.

En revanche, lorsque le pontage n'est plus souhaité, l'établissement à l'intérieur de la conduite 9 et dans la chambre 8, d'une pression d'alimentation supérieure à celle qui règne dans l'enceinte du convertisseur 1, désolidarise le plateau 6 et le piston 7, de l'élément 11.

A l'extrémité du moyeu de turbine 14, on distingue un des crans 19 de fixation du moyeu de turbine 14, sur le moyeu de piston 13. Les crans 19, répartis régulièrement autour du moyeu de turbine 14, font saillie à l'extrêmité de celui-ci. Ils sont engagés à l'intérieur d'évidements 18 de forme complémentaire ménagés dans la masse d'évidements 18 de forme complémentaire ménagés dans la masse du moyeu de piston 13, de façon à solidariser les deux parties du moyeu 13, 14.

Comme indiqué plus haut, les extrusions 7', embouties sur le piston 7 et engagées au travers de la rondelle de friction 12, assurent l'immobilisation en rotation du piston 7, par rapport à la rondelle 12, tout en autorisant son déplacement sur le moyeu de piston 13. La figure 2 met également en évidence que le moyeu de piston 13 maintient en permanence la rondelle 12, en appui contre l'intérieur de la cloche 2, quelle que soit la position du piston 7. Grâce à cette disposition, le convertisseur 1 gagne en rigidité, et on obtient une meilleure répartition des efforts au sein de celui-ci, aussi bien en phase pontée, qu'en phase dépontée. De plus, la course de déplacement axial du piston 7 sur le moyeu de piston 13 est rigoureusement contrôlée par la largeur de ce dernier. Il faut noter également la présence d'un joint torique 17, engagé dans une gorge annulaire 16 du moyeu de piston 13, sous le piston 7. Ce dernier est en appui sur le joint 17, quelle que soit sa position. Enfin la face de la rondelle 12, opposée à la cloche 2, présente un repère visuel 20, de forme allongée, dont la fonction est expliquée plus loin.

Conformément à l'invention, il est possible d'assembler certains des éléments constitutifs du convertisseur 1 entre eux, avant leur montage sur celui-ci. C'est le cas par exemple du piston 7 et du moyeu de piston 13, qui peuvent être assemblés puis fixés sur la rondelle 12 au moyen de rivets 15, avant d'être introduits dans la cloche 2. De même, la turbine 4 sera avantageusement fixée sur le plateau 6, avant que l'ensemble plateau 6, turbine 4 soit introduit dans la cloche.

Le montage du convertisseur 1, pourra donc être réalisé selon les étapes suivantes, dans l'ordre indiqué ou dans un ordre différent :
- montage de l'amortisseur 10, sur la cloche 2,
- montage du joint 17, dans la gorge 16 du moyeu de piston 13,
- montage de la rondelle 12, sur le piston 7,
- montage du piston 7, sur le moyeu de piston 13,
- montage de l'ensemble rondelle 12, piston 7, moyeu de piston 13, dans la cloche 2,
- montage de l'élément de serrage 11, sur l'amortisseur 10,
- montage du plateau 6, sur le moyeu de turbine 14,
- montage de l'ensemble plateau 6, moyeu de turbine 14, sur le moyeu de piston 13.

Enfin la fonction du repère 20, mentionné plus haut est la suivante. Lorsque le montage de la turbine 2 est achevé l'opérateur déplace en rotation l'arbre de turbine 5. La rondelle 12 étant solidaire en rotation de celui-ci, si les crans 19 du moyeu de turbine 14 ont été correctement engagés dans les évidements 18 correspondants du moyeu de piston 13, le repère 20 suit l'arbre de turbine 5. L'opérateur dispose ainsi d'un moyen de contrôle simple et fiable lui permettant de s'assurer que les deux parties 13 et 14 du moyeu, et donc la turbine 4 et le piston 7, sont sont correctement assemblés.

En conclusion, il faut souligner que l'adaptation d'une rondelle de friction en appui contre la cloche dans toutes les situations, assure le guidage en translation du piston, et son immobilisation en rotation vis-à-vis de la turbine, grâce à ses extrusions cylindriques. Cette disposition est extrêmement avantageuse puisque l'appui axial du moyeu de piston entre le plateau de turbine et la cloche est garant d'une excellente transmission du couple au sein du convertisseur, les rivets ne risquent pas d'être soumis à des efforts excessifs, et la course du piston est contrôlée par la longueur du moyeu de piston et des extrusions cylindriques.

Enfin, alors que selon la disposition décrite dans la demande de brevet de la demanderesse FR 9204834 mentionnée plus haut, la turbine se monte sur le piston à l'intérieur du convertisseur, donc en aveugle, et la mise en place des rivets s'effectue par tatonnement, l'invention permet d'effectuer le montage de la turbine sur le piston et la pose des rivets, à l'extérieur de la cloche.

## Revendications

**[1]** Convertisseur de couple hydrocinétique (1) entre un arbre d'entrée de mouvement (3) et un arbre de sortie ou arbre de turbine (5) comportant une cloche extérieure (2) solidaire de l'arbre d'entrée de mouvement (3), une turbine (4) solidaire de l'arbre de sortie (5) et un piston (7) solidaire en rotation de la turbine (4), dont le serrage contre un élément (11) fixé sur la cloche (2) permet d'interdire de façon temporaire tout glissement à l'intérieur du convertisseur (1), caractérisé en ce que le piston (7) est solidaire en rotation d'une rondelle de friction (12) maintenue en appui contre la cloche (2).

**[2]** Convertisseur de couple hydrocinétique (1) selon la revendication 1, caractérisé en ce que l'arbre de sortie (5) présente un moyeu en deux parties (13, 14), supportant respectivement le piston (7) et la turbine (4).

**[3]** Convertisseur de couple hydrocinétique selon les revendications 1 ou 2, caractérisé en ce que le piston (7) présente au moins une extrusion cylindrique (7') latérale, engagée au travers de la rondelle (12) de façon à assurer l'immobilisation en rotation du piston (7) vis-à-vis de celle-ci tout en autorisant son déplacement axial entre la cloche (2) et la turbine (4).

**[4]** Convertisseur de couple hydrocinétique (1) selon la revendication 3, caractérisé en ce que les extrusions (7') sont embouties sur la face du piston (7) en regard de la cloche (2).

**[5]** Convertisseur de couple hydrocinétique (1) selon les revendications 2, 3 ou 4, caractérisé en ce que la rondelle (12) est fixée sur le moyeu de piston (13) au moyen de rivets (15).

**[6]** Convertisseur de couple hydrocinétique selon l'une des revendications 2 à 5, caractérisé en ce que la turbine (4) est montée sur la seconde partie du moyeu (14), ou moyeu de turbine (14), par l'intermédiaire d'un plateau (6), fixé sur celle-ci.

**[7]** Convertisseur de couple hydrocinétique (1) selon l'une des revendications 2 à 6, caractérisé en ce que la première partie du moyeu (13), ou moyeu de piston (13), présente à sa périphérie une gorge annulaire (16) recevant un joint torique (17) sur lequel se déplace le piston (7).

**[8]** Convertisseur de couple hydrocinétique (1) selon l'une quelconque des revendications 2 à 7, caractérisé en ce que la première partie du moyeu (13) ou moyeu de piston (13) présente plusieurs évidements (18) régulièrement répartis à sa périphérie, dans lesquels viennent s'emboîter lors du montage, des crans (19) de forme complémentaire, disposés régulièrement autour de la seconde partie du moyeu (14), ou moyeu de turbine (14).

**[9]** Convertisseur de couple hydrocinétique (1) selon l'une des revendications 2 à 8, caractérisé en ce que la rondelle de friction (12) présente un repère visuel (20) de forme allongée, permettant de contrôler l'indexage du moyeu de turbine (14), sur le moyeu de piston (13).

**[10]** Procédé de montage d'un convertisseur (1) conforme à une des revendications 7 ou 8, caractérisé en ce qu'il comporte les étapes suivantes :
- montage de l'amortisseur (10) sur la cloche (2),
- montage du joint (17) dans la gorge (16) du moyeu de piston(13),
- montage de la rondelle (12) sur le piston (7),
- montage du piston (7) sur le moyeu de piston (13),
- montage de l'ensemble rondelle (12), piston (7), moyeu de piston (13) dans la cloche (2),
- montage de l'élément de serrage (11) sur l'amortisseur (10),
- montage du plateau (6) sur le moyeu de turbine (14).

**[11]** Procédé de montage selon la revendication 10, caractérisé en ce que le déplacement du repère (20) de la rondelle de friction (12), permet de contrôler l'indexage du moyeu de turbine (14) sur le moyeu de piston (13).
